(19) **Europäisches Patentamt**
**European Patent Office**
**Office européen des brevets**

(11) **EP 2 574 956 A1**

(12) **EUROPEAN PATENT APPLICATION**

(43) Date of publication:
**03.04.2013 Bulletin 2013/14**

(51) Int Cl.:
**G01S 7/52** (2006.01)

(21) Application number: **11183566.6**

(22) Date of filing: **30.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **GE Inspection Technologies Ltd Coventry, West Midlands CV4 8AF (GB)**

(72) Inventors:
• **Qiao, Xiaoyu**
  **Hatfield, Hertfordshire AL10 9FL (GB)**

• **Jobst, Matthias**
  **50354 NRW (DE)**

(74) Representative: **Illingworth-Law, William Illingworth**
**Global Patent Operation - Europe**
**GE International Inc.**
**15 John Adam Street**
**London WC2N 6LU (GB)**

(54) **Ultrasound imaging system and method with side lobe suppression via coherency factor weighting**

(57) This invention relates generally to non-destructive testing and in particular to ultrasound imaging. A adaptive beamforming imaging method of operating a portable ultrasound imaging system having an array of transducer elements is disclosed. The method comprises transmitting a plurality of beamforming ultrasound signals with each transmission using a different sub-aperture of the array; receiving a reflected ultrasound signals and producing DAS (Delay and Sum) beamforming under each individual sub-aperture transmission. Meanwhile, a coherency factor was calculated based on the proportion of coherent energy in the received time delayed signals from each sub-aperture transmission. All beamforming imaging under defined sub-aperture transmissions were adaptive coherent weighted and synthetised into the final beamforming output. The presented method enables a portable imaging system generating imaging with good quality clarity, contrast and resolution; but less complex hardware and low calculating requirements.

FIG. 2

EP 2 574 956 A1

**Description**

This invention relates generally to non-destructive testing and in particular to ultrasound imaging.

Non-destructive testing devices can be used to inspect test objects to identify and analyse flaws and defects in the objects. An operator is able to move a probe at or near the surface of the test object in order to perform testing of both the object surface and its underlying structure. Non-destructive testing can be particularly useful in some industries such as aerospace, power generation, oil and gas recovery and refining where object testing must take place without removal of the object from surrounding structures and where hidden defects can be located that would otherwise not be identifiable through visual inspection.

One example of non-destructive testing is ultrasonic testing. When conducting ultrasonic testing, an ultrasonic pulse can be emitted from a probe and passed through a test object at the characteristic sound velocity of that particular material. The sound velocity of a given material depends mainly on the modulus of elasticity, temperature and density of the material. Application of an ultrasonic pulse to a test object causes an interaction between the ultrasonic pulse and the test object structure, with sound waves being reflected back to the probe. This corresponding evaluation of the signals received by the probe, namely the amplitude and time of flight of those signals can allow conclusions to be drawn as to the internal quality of the test object, such as cracks or corrosion without destroying it.

Generally, an ultrasonic testing system includes a probe for sending and receiving signals to and from a test object, a probe cable connecting the probe to an ultrasonic test unit and a screen or monitor for viewing test results. The ultrasonic test unit can include power supply components, signal generation, amplification and processing electronics and device controls used to operate the non-destructive testing device. Some ultrasonic test units can be connected to computers that control system operations as well as test results processing and display. Electric pulses can be generated by a transmitter and can be fed to the probe where they can be transformed into ultrasonic pulses by ultrasonic transducers.

Conventional ultrasound imaging systems have an array of ultrasonic transducer elements to scan a targeted object by transmitting a focused ultrasound beam towards the object. The reflected acoustic wave is received, beamformed and processed for display.

In conventional beamforming methods, the beam pattern profile is determined by the linear array structure. The elements interval were set less than half wavelength of the working frequency for the aim of avoiding the grating lobes. With less elements in an array structure, it suffers from the inherent drawback of having a wide main lobe and higher level side lobes at predictable angles. This produces lower quality imaging with low resolution caused by less focused response due to the wide main beam, and the low contrast between the true reflections and suffering from significant interference due to the high level unwanted side lobes. The level of the side lobes can be suppressed by using different shading windows, however, this widens the main lobe as the trade off price which, further decreases imaging resolution. Other methods have been considered for effectively reducing the effect of the side lobes, such as Minimum Variance method, but these generally involve a considerable level of calculation, resulting in increased costs and reduced speed.

Whilst the level of the side lobes can be reduced by using a larger array structure, this increases the cost, size and complexity of any such system.

It would be desirable to have a portable imaging system and corresponding method which produces a better quality output image with high contrast and acceptable good resolution without being excessively large, complex or expensive.

According to a first aspect of the present invention, there is provided a method of operating an ultrasound imaging system having an array of transducer elements, the method comprising:

transmitting a plurality of ultrasound signals each using a different sub-aperture of the array;
receiving a reflected ultrasound signal corresponding to each sub-aperture transmission using the whole array or a sub-aperture of the array;
calculating a coherency factor corresponding to the proportion of coherent energy in the received signals from each sub-aperture transmission and weighting the corresponding output signal by the calculated coherency factor; and
synthesizing all the coherent factor weighted output signals under all different sub-aperture transmissions to produce the final imaging converted pixel intensity.

Transmitting a plurality of ultrasound signals using different sub-apertures of the array provides enhanced receiving sensitivity of the defects but without a large number of transmission channels. The use of the coherency factor enhances the suppression of the side lobes enhancing the beamforming performance to produce the imaging in enhanced qualities of clarity, contrast and resolution.

Each sub-aperture may use any splitting of transducer elements in the array. The sub-apertures may overlap or not overlap each other producing improved side lobe suppression and enhanced image contrast. Preferably the whole array of transducer elements is used to receive the reflected ultrasound waves and produce each received focusing signal. The coherency factor preferably corresponds to the proportion of coherent energy in the total non-coherent energy of each received transducer signal.

The received signals may be focused such as by being beamformed.

The coherency factor is preferably in the range from 0 to 1 inclusive. A higher value is indicative of a higher proportion of coherent energy contained in the total collected signal energy and thus a higher confidence of good focusing quality.

According to a second aspect of the invention, there is provided an ultrasound imaging system, the system comprising:

an array of transducer elements arranged to transmit a plurality of ultrasound signals using different sub-apertures of the array and to receive reflected ultrasound signals from a test piece for each of the sub-aperture transmissions; a controller arranged to calculate a coherency factor corresponding to the proportion of coherent energy in the received signals from each sub-aperture transmission and to weight the received signal by the calculated coherency factor; synthetize all weighted outputs from the different sub-aperture transmissions; and

an output for a providing an output signal to be provided to a display for displaying an image representing a structure of the test piece.

Examples of the present invention will now be described, by way of example only, with reference to the accompanying drawings in which:

Figure 1 shows an example of a typical ultrasonic testing system;
Figure 2 shows an example of an ultrasonic testing system illustrating the present invention;
Figure 3 shows a more detailed example of the non-overlapped sub-aperture transmission part of an example of the present invention;
Figure 4 illustrates beamforming steering scan imaging;
Figure 5 shows a more detailed example of the receiving part regarding to three sub-aperture transmission in figure 3 of an example of the present invention;
Figures 6a and 6b provide examples of imaging produced by a system with Synthetic Fixed Transmission Focusing with Dynamic Receive Focusing (STF-DRF) only, and adaptive synthetic STF-DRT imaging produced by an example of the present invention;
Figure 7 illustrates the detected defect pixel intensity at different depths for the images shown in Figures 6a and 6b; and
Figures 8a and 8b show further comparative examples of imaging by synthetic sub-aperture Synthetic Fixed Transmission Focusing with Dynamic Receive Focusing (STF-DTF) method and imaging by an example of the present invention.

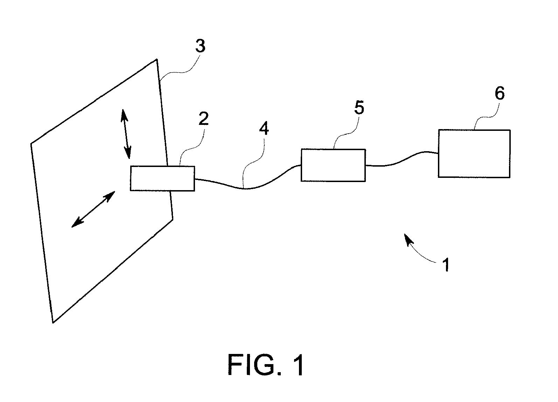

Figure 1 shows an example of an ultrasonic testing system 1. The system includes a probe 2 for sending and receiving signals to and from a test object 3. In this example the probe 2 is arranged to send and receive a reflected ultrasonic signal from the test object 3. However, in other examples the probe could instead be arranged to receive ultrasonic signals transmitted through a test object 3. The test object 3 could be any suitable object to be analysed for flaws and defects, such as, for example, panels of a vehicle such as an aircraft or a ship, sections of a pipeline or parts of an industrial plant which may take place without having to remove the object from surrounding structures. In use, the probe 2 is moved over the surface of the test object 3 to analyse the structure of the object. The probe 2 has an array of transducer elements. A probe cable 4 connects the probe 2 to an ultrasonic test unit 5. The ultrasonic test unit has a control processor for signal generation, amplification and processing electronics for example to generate electric pulses to be fed to the probe 2 where they can be transformed into ultrasonic pulses by the ultrasonic transducers. The ultrasonic test unit 5 may also receive the reflected signal produced by the probe 2. The ultrasonic test unit 5 has an electrical output and may include or be connected to a screen or monitor 6 to display results based on the output to a user to enable them to analyse the structure of the test object 3 and identify any possible flaws or defects in the test object. For a portable testing system, the ultrasonic test unit 5 would be combined with the screen or monitor 6 in a single unit. The screen or monitor 6 may be provided by a computer which may be connected to the ultrasonic test unit 5 and which may also provide some of the functions of the ultrasonic test unit 5.

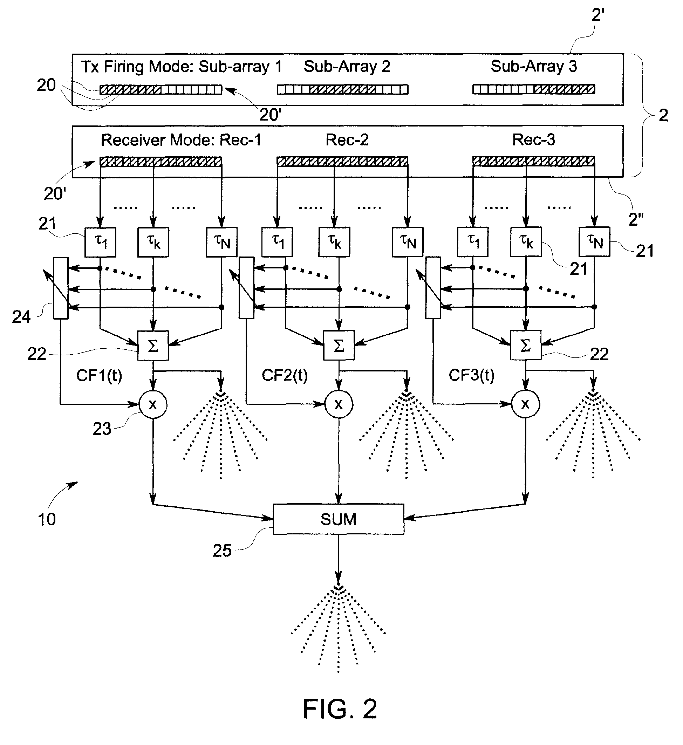

Figure 2 shows an embodiment of an imaging system 10 in accordance with the present invention. This embodiment is an adaptive synthetic Transmit Focusing and Dynamic Receive Focusing (adaptive STF-DRF) beamforming method. The probe 2 comprises a plurality of transducer elements 20 in an array 20'. Figure 2 shows the probe 2 having a linear array 20' of sixteen transducer elements 20, in this example. The upper part 2' schematically shows the probe when transmitting. As can be seen, the probe 2 is arranged to transmit a plurality of ultrasound signals using different sub-apertures or sub-arrays. In the example of Figure 2, sub-array or sub-aperture 1 comprises transmitting with the eight transducer elements 20 on the left of the array 20, sub-array or sub-aperture 2 comprises transmitting with the eight transducer elements 20 in the middle of the array 20' and sub-array or sub-aperture 3 comprises transmitting with the eight transducer elements on the right hand side of the array structure 20' one sub-aperture after the other. Any suitable arrangement of sub-apertures of the array 20' using any desired number of transducer elements 20 which may or may not overlap may be used. The lower part 2" of the probe 2 as illustrated in Figure 2 shows the use of the transducer array for receiving echoes from the test object 3. In this example all of the transducer elements 20 of the array 20' are used to receive the reflected signal. In this example the signal generated by each transducer element 20 corresponding to its received ultrasound signal receives an appropriate beamforming delay from delay unit 21 and the delayed received signals are summed in summing unit 22. The received beamforming output from each sub-aperture transmission are then weighted 23 by a coherency factor CF1(t), CF2(t), CF3(t) ... corresponding to the proportion of coherent energy in each received signal. The weighting 23 may include multiplying by the coherency factor. In this example, the coherency factor is determined in a coherency factor unit 24 to correspond to the proportion of coherent energy in the total non-coherent energy of each received signal from each sub-aperture transmission.

The coherency factor weighted received output from each sub-aperture transmission are then summed by synthesis unit 25 to provide a clearer final image such that any defects or flaws may be easily identified.

In practice, all of the delay 21, DAS beamforming 22, weighting 23, adaptive coherent factor determining 24 and synthesizing 25 are performed in a control processor such as a computer, microprocessor or by hard wired electronics.

Figure 2 shows a single probe 2 with the transducer elements 20 first being used in a firing mode with a first sub-array or sub-aperture 1, then in a second firing mode with the second sub-array or sub-aperture 2 and then being used in a third firing mode with a third sub-array or sub- aperture 3. Below each sub-aperture firing mode is shown all of the transducer elements 20 of the array 20' functioning in a receiver mode, weighting 23 each of the received beamforming outputs by a coherency factor 24 and synthesizing 25 all of the coherency factor weighted received beamforming outputs from each sub-aperture transmission.

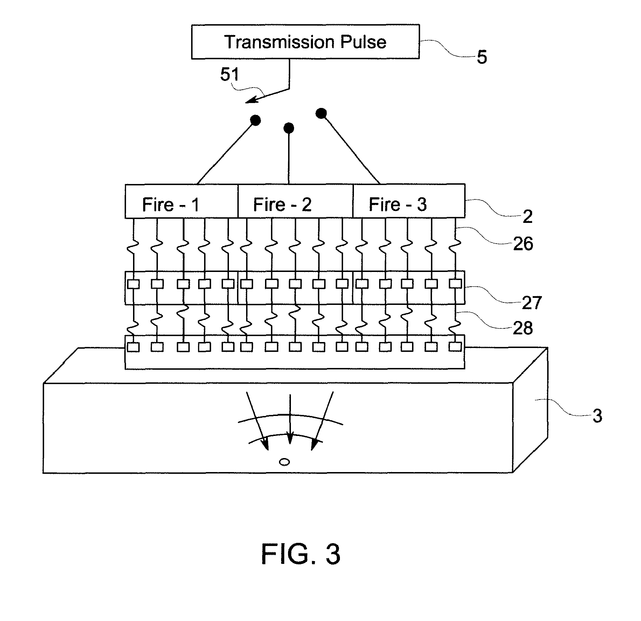

Figure 3 shows another example of the probe 2 being controlled with three sub apertures (Fire-1, Fire-2 and Fire-3). In this example the sub apertures do not overlap. However, the present invention relates to any suitable number of two or more sub-apertures and each of the sub-apertures may contain any number of two or more transducer elements. In this example the ultrasonic test unit 5 is schematically shown including a rotary switch 51 to illustrate sequential firing of different sub-apertures within the array 20' of transducer elements 20. The example of Figure 3 illustrates the signal 26 from each transducer element being delayed 27 to produce beamformed, steered focused transmitting beams 28 which enter a test object 3 with a required scan steering angle and focusing depth. The sub-apertures may adopt any desired focusing strategy such as fixed focusing or dynamic focusing by controlling the delays in unit 27 accordingly. The corresponding delays are used in the receive section 21.

The use of sub-apertures for firing pulses into the test object 3 while all elements (N elements 20) in the whole array 2" are active for collecting the echoes increases one or more of the sensitivity, the penetration depth, and signal-to-noise ratio for each round-trip of data processing. For non-overlapping synthetic transmission, if M elements were contained by each defined single sub-array, then L number (L=N/M) of sub-arrays are used (where k=1:L ) for the whole synthetic transmitting processing. The sub-arrays can also be defined by overlapping as well. By this means, the number of sub-arrays is increased and the apodization is introduced on the whole array by weighting the overlap elements.

In the stage of STF-DRF beamforming in the presented invention, the $k^{th}$ group denoted as sub-aperture(k), is composed of multiple M transmitting elements. In each firing stage, M elements are active to incidence pulse into the test object 3 for each firing process and all elements (N elements) in the whole array are active for collecting the echoes stage. With L round-trips for the combined sub-array transmission using the whole array to receive, the data storage was decreased into L*N RF lines.

The array phase center may be predefined by the STF-DRF method, with the sub-array phase-centre defined at each related sub-array geometric center point. It was coordinated in lateral X and depth Z dimensions indicated as $(X_{sub(k)\_PhaseCenter}, Z_{sub(k)\_PhaseCenter}=O)$ for the kth sub-aperture(k). The sub-array phase center is right or left translated by $X_{Sub(k)\_PhaseCenter}$ from the phase center of the whole array.

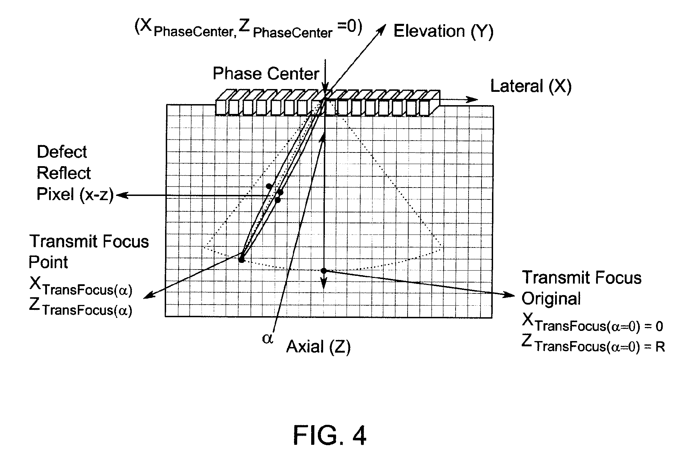

Figure 4 illustrates beamforming steering scan imaging. In order to calculate imaging pixel (x, z) intensity along the beam-line of sub-array(k) steering $\alpha$ angle transmission, the corresponding fixed transmission focus point $(X_{sub(k)\_TransFocus(\alpha)}, Z_{Sub(k)\_TransFocus(\alpha)})$ can be calculated through $\alpha$ angle rotated and shifted by related sub-array phase center in lateral direction $X_{Sub(k)\_PhaseCenter}$, we have

$$x_{Sub(k)\_TransFocus(\alpha)} = R * \sin(\alpha) + x_{Sub(k)\_PhaseCenter}$$

$$z_{Sub(k)\_TransFocus(\alpha)} = R * \cos(\alpha)$$

where, R is the fixed transmission range, for $k^{th}$ sub-array, the pulse travels delay from $i^{th}$ transmission element to its focus point in the travel speed of sound $C_{sound}$ as:

$$\tau_{Sub(k)Trans(i)}(x,z) = (\frac{\sqrt{(x_{Sub(k)\_tr(i)} - x_{Sub(k)\_TransFocus(\alpha)})^2 + z^2_{Sub(k)\_TransFocus(\alpha)}}}{C_{sound}} - \frac{R}{C_{Sound}}) + ... \frac{\sqrt{(x - x_{Sub(k)\_PhaseCenter})^2 + z^2}}{C_{sound}}$$

Eq(1)

while, for $j^{th}$ element receive element under $k^{th}$ sub-array firing, the echo time delay with dynamic focusing can be described as:

$$\tau_{Sub(k)Rev(j)}(x,z) = \tau_{Rev(j)}(x,z) = \frac{\sqrt{(x_{Rev(j)} - x)^2 + z^2}}{C_{sound}}$$

Eq(2)

The synthetic Transmit Focusing with dynamic receive Focusing (STF-DRF) beamform method presents the extracted echoes from steering α angle direction as:

$$P_{x,z} = \sum_{k}^{L}\sum_{i=1}^{M}\sum_{j=1}^{N} S_{i,j}(t - \tau_{Sub(k)Trans(i)}(x,z) - \tau_{Sub(k)Rev(j)}(x,z))$$

Eq(3)

The first summation (index by k) is for L sub-apertures synthetic virtual array transmission, the second summation (index by i) is for the summation of the transmitting beamforming, and the third summation (index by j) is for the receive beamforming.

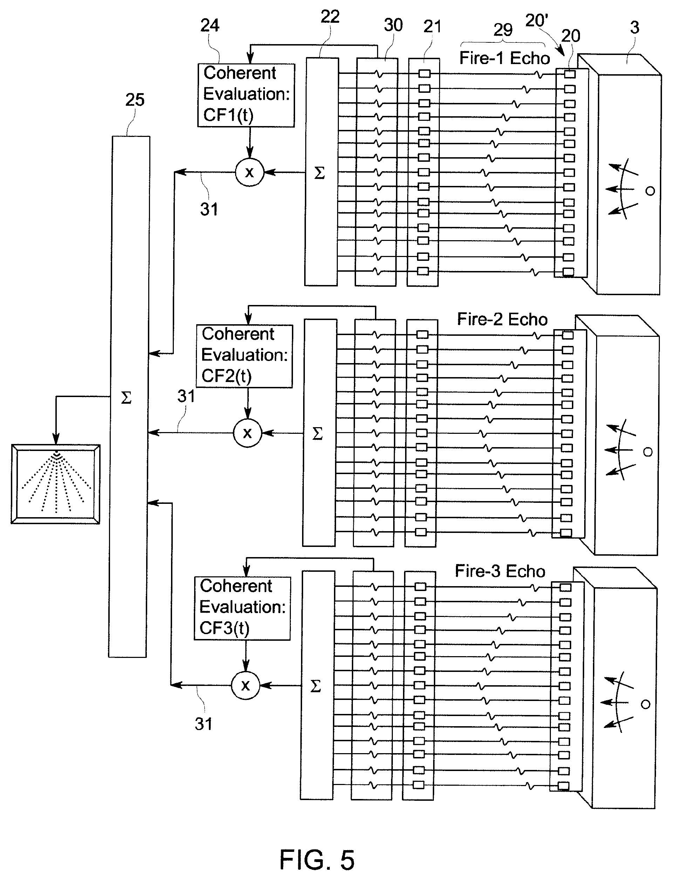

Figure 5 shows a more detailed view of the probe 2 and ultrasonic test unit receiving reflected ultrasound signals from a test object 3. In this example all of the transducer elements 20 of the probe 2 are used for collecting reflected echoes from the test object 3 after each sub-aperture transmission. The signals 29 from the transducer elements 20 are then delayed 21 by an amount corresponding to the required focusing delay. The delayed signals 30 from all of the receiving transducer elements 20 of the array are then summed 22 prior to being weighted by the coherency factor.

An example of a method for determining the coherency factor will now be described.

For a transducer array 20' with a number of receiving transducer elements 20 given as NumRec and the number of sub aperture beamforming transmitting sub-arrays being NumSub, the imaging intensity of each receiving pixel (x, z) in a beam steering scan area can be described as:

Eq(4)

$$Pixel(x,z,t) = \sum_{Sub=1}^{NumSub} \sum_{j=1}^{NumRec} X_{sub,i}(t - \tau j(x,z))$$

Where $X_{sub\,j}(t - \tau j(x,z))$ is the timed received signal of the i-th receive element 20 in the receive phase array under Sub-th sub-aperture fixed focusing firing.

Each received echo signal collected through the receive array elements 20 would be timed and aligned at the focusing point (x,z) by applying, as shown by block 21 a corresponding time delay $\tau j(x,z)$. All alignment signals are then summed as shown by block 22 and defined as the focusing intensity pixel (x,z) in the imaged image.

During the processing of the received echo signal as illustrated in Figure 5, the focusing qualities are constantly evaluated for each steering scan imaging pixel before they are finally synthesized into imaging pixels at unit 25. The coherency factor is introduced and defined in equation 5 below:

$$CF_{Sub}(x,z,t) = \frac{\left| \sum_{j=1}^{Num\,Re\,c} X_{Sub,j}(t - \tau_j(x,z)) \right|^2}{Num\,Re\,c * \sum_{j=1}^{Num\,Re\,c} \left| X_{Sub,j}(t - \tau(x,z)) \right|^2} \qquad \text{Eq(5)}$$

The coherency factor $CF_{Sub}(x,z,t)$ for each sub-aperture transmission can be interpreted as a spatial coherency confidence ratio and is calculated as the proportion or percentage of coherent energy in the total non-coherent energy collected by the alignment focusing received signal from all transducer elements in the array 20'. In this example the value of the coherency factor is from 0 to 1 inclusive. The higher the value corresponds to the higher proportion of coherent energy contained in the total collected signal energy indicating a higher confidence of good focusing quality or correctly aligned focused received signal and the lower the value of the coherency factor indicates a poor focusing quality.

It has been found that applying the adaptive coherent measurement weighting strongly emphasises the in-phase signals, increasing the adaptive coherent confidence ratio whilst significantly suppressing the out-of-phase signals providing enhanced contrast between the true reflections with significantly reduced interference producing higher quality resultant images.

The resultant adaptive STF-DRF imaging intensity of a pixel (x,z) in a beam steering scan area when multiplied by the coherency factor for a received transducer element 20 numbered as NumRec and with the number of sub-aperture transmitting arrays NumSub is defined as:

$$Pixel(x,z,t) = \sum_{Sub=1}^{NumSub} CF_{sub}(x,z,t) * \sum_{j=1}^{NumRec} X_{sub,j}(t - \tau_j(x,z)) \qquad \text{Eq(6)}$$

As explained above, this results in a higher quality resultant image with high contrast between the true reflections and suffering from much less interference.

The coherency factor weighted received signals 31 from each of the plurality of sub-aperture transmissions are then synthesized in unit 25 to provide the final image.

When using the testing system with test objects having different properties such as by being made of different materials, some parameters of the equations may be adjusted accordingly.

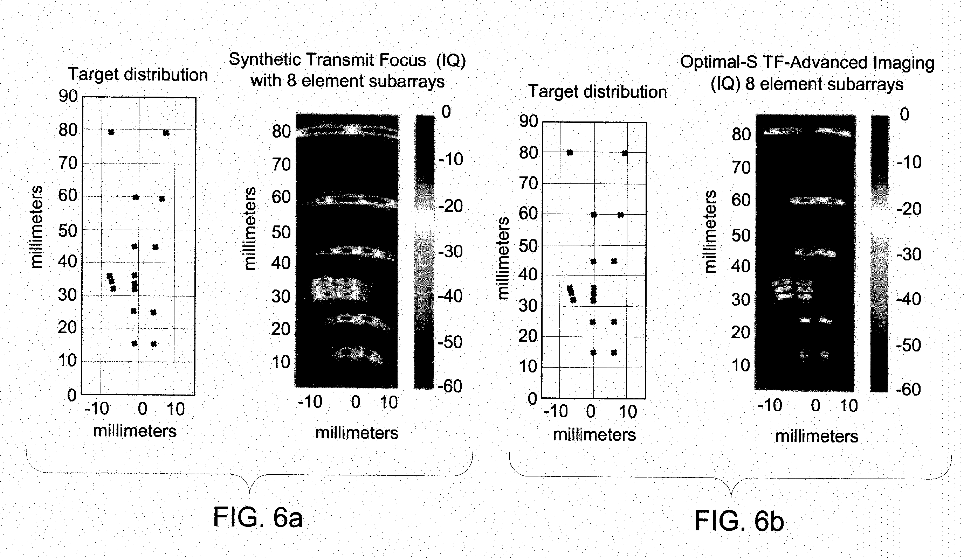

Figure 6a shows resultant images produced by the stage of STF-DRF ultrasound imaging only and Figure 6b shows imaging results for the same test object using an example of the present invention. As can be seen by comparison of these resultant images, those produced by an example of the present invention in Figure 6b have significantly better contrast and lower interference such that an operator may interpret these far more easily and be able to obtain information about the detected structure such as its size and be able to decide whether or not to take remedial action more confidently.

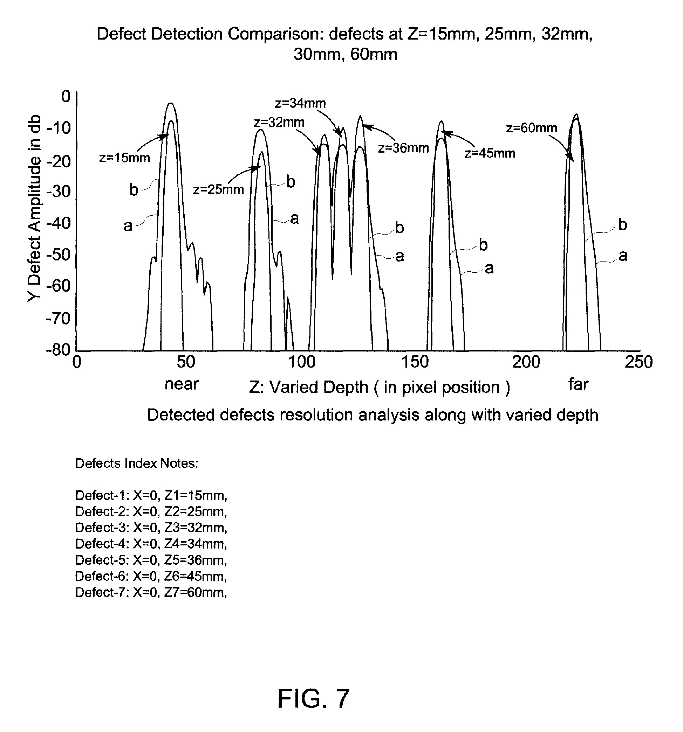

Figure 7 is a comparison of the detected defect pixel intensity at different depths for the method shown in Figure 6a and the method of an example of the present invention shown in Figure 6b. In Figure 7, the amplitude of the signal for the method shown in Figure 6a is labelled a and the amplitude of the signal produced by the example of the present invention from Figure 6b is labelled b. As can be seen, for each of the defects in the test object 3, the signals produced by the example of the present invention are far more precise with less "spread" producing a far more precise and true indication of the defects in the test piece to an operator.

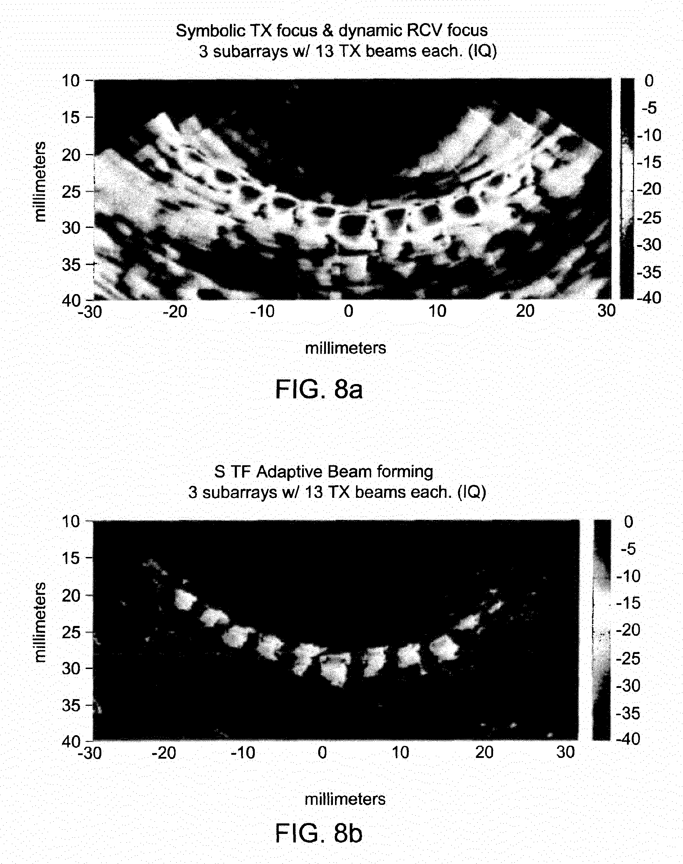

Figure 8a shows another example of an image of a test object with defects produced by an imaging method not using a coherency factor and Figure 8b shows the results from the same test piece using an example of the present invention. As can be clearly seen, the defects are far more easily identifiable using the example of the present invention with less interference enabling an operator to far more reliably identify defects in a test piece and also be able to provide information about the defect, such as how serious it is.

Many variations may be made to the examples described above without departing from the scope of the present invention. For example, any number of sub-apertures of the array 20' may be used and each of those sub-apertures may have any desired number of transducer elements 20. Examples of the invention may be used to provide 3D beamforming imaging. Any type of array may be used such as a one dimensional or two dimensional array.

**Claims**

1.  A method of operating an ultrasound imaging system having an array of transducer elements, the method comprising:

    transmitting a plurality of ultrasound signals, each transmission using a different sub-aperture of the array;
    receiving a plurality of reflected ultrasound signals by a receive array corresponding to each sub-aperture transmission;
    calculating a coherency factor corresponding to the proportion of coherent energy in the received signals from each sub-aperture transmission and weighting the received output by the calculated coherency factor; and
    synthesizing all weighted outputs under all different sub-aperture transmissions.

2.  A method according to claim 1, wherein the coherency factor weighted beamforming outputs from each of the plurality of sub-aperture transmissions are synthesized.

3.  The method according to claim 1 or claim 2, wherein the coherency factor corresponds to the proportion of coherent energy in the total non-coherent energy of timed received transducer signals.

4.  The method according to any preceding claim, wherein the Delay-and-Sum principle is used for either sub-aperture transmitting beamforming or receiving beamforming or both.

5.  The method according to any one of the preceding claims, wherein transmit beamforming is used in the form of fixed focus transmission, multiple fixed focus transmission zone, or full dynamic transmitting focus.

6.  The method according to any preceding claim, wherein dynamic focusing is used in receive focusing beamforming.

7.  The method according to any preceding claim, wherein the coherency factor is defined in each different coherent measurement either in the energy, amplitude or sign of the timed received signal.

8.  The method according to any preceding claim, wherein the coherency factor is normalized in the range from 0 to 1 inclusive with a higher value being indicative of a higher proportion of coherent signals contained in the total signal collected by a transducer.

9.  A method according to any one of the preceding claims, wherein the imaging intensity of each pixel (x,z,t) is determined according to the following equation:

$$Pixel(x,z,t) = \sum_{Sub=1}^{NumSub} CF_{sub}(x,z,t) * BeamF_{sub} \qquad \text{Eq(7)}$$

where $BeamF_{sub}$ is the beamforming output under index sub sub-aperture transmitting.

10. The method according to claim 9, wherein the beamforming output $BeamF_{sub}$ can be either obtained by the conventional DAS method, or advanced method such as Minimum Variance Method (MVM).

11. The method according to claim 10, wherein the conventional DAS beamforming is determined according to the following equation:

$$BeamF_{sub} = \sum_{j=1}^{NumRec} X_{sub}(t - \tau_{j(x,z)}) \qquad \text{Eq(8)}$$

Therefore, the equation:

$$Pixel(x,z,t) = \sum_{Sub=1}^{NumSub} CF_{sub}(x,z,t) * \sum_{j=1}^{NumRec} X_{sub,j}(t - \tau_j(x,z))$$

Eq(9)

where NumRec is the number of receiving transducer elements, $X_{sub}(t - \tau_j(x,z))$ is the timed received signal of the j-th receive element 20 in a receive phase array under the Sub-th transmitting sub-aperture firing: t is the time at which a signal is received; $\tau_j(x,z)$, is the applied time delay and $CF_{sub}(x,z,t)$ is the sub-aperture coherency factor.

12. A method according to any one of the preceding claims, wherein the entire array of transducer elements or a sub-aperture is used to receive a signal corresponding to the reflected ultrasound signal from each sub-aperture transmission.

13. A method according to any one of the preceding claims, wherein the sub-apertures of the array can be used as overlap or splitting as non-overlap sub-apertures.

14. A method according to any one of the preceding claims, used for 3D beamforming imaging.

15. A method according to any one of the preceding claims using a 2D array.

16. A method according to any one of the preceding claims, used for non-destructive testing.

17. An ultrasound imaging system, the system comprising:

an array of transducer elements arranged to transmit a plurality of ultrasound signals using different sub-apertures of the array and to receive reflected ultrasound signals from a test piece for each of the sub-aperture transmissions;
a controller arranged to calculate a coherency factor corresponding to the proportion of coherent energy in the received signal from each sub-aperture transmission and to weight the received signal by the calculated coherency factor; and
an output for a providing an output signal to be provided to a display for displaying an image representing a structure of the test piece;
wherein the controller is arranged to synthesize the coherency factor weighted received signals from each of the plurality of sub-aperture transmissions.

18. The ultrasound imaging system of claim 17, wherein the sub-aperture coherency factor corresponds to the proportion of coherent energy in the total non-coherent energy received by each transducer.

19. The system according to claims 17 or claim 18, wherein the system is arranged to determine the imaging intensity of each pixel (x,z,t) using the following equation:

$$Pixel(x,z,t) = \sum_{Sub=1}^{NumSub} CF_{sub}(x,z,t) * \sum_{j=1}^{NumRec} X_{sub,j}(t - \tau_j(x,z))$$

where NumRec is the number of receiving transducer elements, $X_{sub,i}(t - \tau_j(x,z))$ is the timed received signal of the i-th receive element in a receive phase array under the Sub-th transmitting sub-aperture firing: t is the time at which a signal is received; $\tau_j(x,z)$, is the applied time delay and $CF_{sub}(x,y,z)$ is the sub-aperture Coherency Factor.

20. The ultrasound imaging system according to any one of claims 17 to 19, wherein all of the transducer elements of the array are used to receive the reflected ultrasound signal.

3

2

4

5

6

1

## FIG. 1

FIG. 2

**FIG. 3**

FIG. 4

FIG. 5

FIG. 6a

FIG. 6b

Defect Detection Comparison: defects at Z=15mm, 25mm, 32mm, 30mm, 60mm

Detected defects resolution analysis along with varied depth

Defects Index Notes:

Defect-1: X=0, Z1=15mm,
Defect-2: X=0, Z2=25mm,
Defect-3: X=0, Z3=32mm,
Defect-4: X=0, Z4=34mm,
Defect-5: X=0, Z5=36mm,
Defect-6: X=0, Z6=45mm,
Defect-7: X=0, Z7=60mm,

FIG. 7

Symbolic TX focus & dynamic RCV focus
3 subarrays w/ 13 TX beams each. (IQ)

millimeters

FIG. 8a

S TF Adaptive Beam forming
3 subarrays w/ 13 TX beams each. (IQ)

millimeters

FIG. 8b

EUROPEAN SEARCH REPORT

Application Number

EP 11 18 3566

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FRITSCH C ET AL: "Phase Coherence Imaging", IEEE TRANSACTIONS ON ULTRASONICS, FERROELECTRICS AND FREQUENCY CONTROL, IEEE, US, vol. 56, no. 5, 1 May 2009 (2009-05-01), pages 958-974, XP011269103, ISSN: 0885-3010, DOI: 10.1109/TUFFC.2009.1128 * abstract; figures 6-8 * * Sections I.-IV. * | 1-20 | INV. G01S7/52 |
| X | WO 2011/095896 A1 (UNIV DALHOUSIE [CA]; BROWN JEREMY [CA]; ADAMSON ROBERT [CA]; TORBATIAN) 11 August 2011 (2011-08-11) * abstract; figures 5-7 * * paragraphs [0002] - [0010] * * paragraphs [0026] - [0060], [0064], [0071], [0072] * | 1-20 | |
| X | PAI-CHI LI ET AL: "Adaptive imaging using the generalized coherence factor", IEEE TRANSACTIONS ON ULTRASONICS, FERROELECTRICS AND FREQUENCY CONTROL, IEEE, US, vol. 50, no. 2, 1 February 2003 (2003-02-01), pages 128-141, XP011368416, ISSN: 0885-3010, DOI: 10.1109/TUFFC.2003.1182117 * abstract; figures 5(a), 5(b) * * Sections I.-V. * | 1-20 | TECHNICAL FIELDS SEARCHED (IPC) G01S |

-/--

The present search report has been drawn up for all claims

| Place of search | Date of completion of the search | Examiner |
|---|---|---|
| Munich | 6 March 2012 | Zaneboni, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt European Patent Office Office européen des brevets | **EUROPEAN SEARCH REPORT** | Application Number EP 11 18 3566 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TORBATIAN Z ET AL: "A split-aperture transmit beamforming technique with phase coherence grating lobe suppression", IEEE TRANSACTIONS ON ULTRASONICS, FERROELECTRICS AND FREQUENCY CONTROL, IEEE, US, vol. 57, no. 11, 1 November 2010 (2010-11-01), pages 2588-2595, XP011320241, ISSN: 0885-3010 * abstract; figures 1-3 * * Sections I.-III. * ----- | 1-20 | |
| A | K.W. HOLLMAN ET AL: "Coherence factor of speckle from a multi-row probe", 1999 IEEE ULTRASONICS SYMPOSIUM. PROCEEDINGS. INTERNATIONAL SYMPOSIUM (CAT. NO.99CH37027), vol. 2, 1 January 1999 (1999-01-01), pages 1257-1260, XP55020986, ISSN: 1051-0117, DOI: 10.1109/ULTSYM.1999.849225 ISBN: 978-0-78-035722-8 * the whole document * ----- | 1-20 | **TECHNICAL FIELDS SEARCHED (IPC)** |

The present search report has been drawn up for all claims

| Place of search | Date of completion of the search | Examiner |
|---|---|---|
| Munich | 6 March 2012 | Zaneboni, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 18 3566

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2012

| Patent document cited in search report | Publication date | Patent family member(s) | Publication date |
|---|---|---|---|
| WO 2011095896 A1 | 11-08-2011 | NONE | |

For more details about this annex : see Official Journal of the European Patent Office, No. 12/82